# EUROPÄISCHE PATENTSCHRIFT

(11) **EP 2 093 270 B1**
(45) Veröffentlichungstag und Bekanntmachung des Hinweises auf die Patenterteilung: **01.11.2017**
(21) Anmeldenummer: 08003029.9
(22) Anmeldetag: 19.02.2008
(51) Int. Cl.: C09K 9/02, G02F 1/15

(54) **Verwendung von Antioxidantien zur Unterdrückung von Selbstentladung**
Use of antioxidants for treating self discharge
Utilisation d'antioxydants destinés à juguler un déchargement spontané

(43) Veröffentlichungstag der Anmeldung: 26.08.2009
(73) Patentinhaber: EControl-Glas GmbH & Co. KG, 08527 Plauen (DE)
(72) Erfinder: Jödicke, Dirk, Furth im Wald (DE)
(74) Vertreter: Angerhausen, Christoph

(56) Entgegenhaltungen:
- EP-A- 0 961 156
- US-A- 5 054 895
- US-A1- 2005 213 186
- US-A1- 2006 007 519

## Beschreibung

Die Erfindung betrifft das technische Gebiet elektrochromer Elemente, welche häufig auf oder zwischen transparenten Substraten angeordnet sind und mittels Anlegen einer elektrischen Spannung die Variation der Transparenz solcher Systeme ermöglichen.

Aus dem Stand der Technik bekannte elektrochrome Elemente bestehen zumeist aus zwei transparenten Substraten, beispielsweise aus Glas oder Kunststoff gefertigt, welche über eine zentrale ionenleitfähige Komponente und auf beiden Seiten dieser jeweils über eine Elektrode sowie eine elektrochrome Beschichtung miteinander verbunden sind. Zweckmäßigerweise sind auch die Elektroden aus einem transparenten Material gefertigt, wie es zum Beispiel mit Hilfe von dotierten Metalloxiden, beispielsweise aluminiumdotiertem Zinkoxid, fluordotiertem Zinnoxid oder auch indiumdotierten Zinnoxid, allgemein TCO-Materialien, realisiert werden kann. Materialien für eine erste elektrochrome Beschichtung (EC1) sind zum Beispiel Wolframoxid, Molybdenoxid, Nickeloxid oder auch Iridiumoxid. Materialien für die zweite elektrochrome Beschichtung (EC2) können zum Beispiel Ceroxid, Titanoxid, Vanadiumoxid, Nioboxid, Tantaloxid oder auch Mischungen aus den genannten Metalloxiden sein. Die ionenleitfähige Komponente ist häufig auf der Basis von modifizierten Polyvinylbutyralen, Polyethylenoxiden, Polyethyleniminen oder Polyacrylaten hergestellt.

Die Verwendung modifizierter Polyvinylbutyrale ist aus der DE 103 27 517 und der WO 02/40578 bekannt. Die Patentschriften FR 2 690 536, US 5 241 411 und DE 692 138 33 offenbaren die Anwendung modifizierter Polyethylenoxide und Polyethylenimine zum gleichen Zweck. Die Verwendung von Acrylaten und anderen Polymeren ist bereits aus der EP 1 283 436, der DE 695 281 48 sowie der DE 4 417 219 hinreichend bekannt.

Die US 5,054,895 A beschreibt die Verwendung von TINUVIN 123 und IRGANOX 1330 als Antioxidantien zur Stabilisierung von elektrochromen Elementen, wobei die Antioxidantien und Lichtstabilisatoren ausschließlich in einer oxydativ farbgebenden Beschichtung verwendet werden.

Die US 2006/007519 A1 offenbart Polymere, die gegen Degradierung und Vergilbung stabilisiert sind. Zu diesem Zwecke ist vorgesehen, dass Additive die Vergilbung eines Lösemittels, das selbst Bestandteil eines leitfähigen Polymers ist, unterdrücken. Als ein mögliches Lösemittel wird unter anderem Propylencarbonat genannt.

Eine ionenleitfähige Komponente aufweisende elektrochrome Elemente weisen demnach typischerweise folgende Struktur auf:
Substrat - TCO - EC1 - ionenleitfähige Komponente - EC2 - TCO - Substrat

Elektrochrome Elemente dieser Konstruktion lassen sich durch Anlegen einer elektrischen Spannung in ihrer Transmissivität variieren. Wird die elektrochrome Elementkomponente EC1 über die ihr zugeordnete TCO-Elektrode mit einer negativen Spannung beaufschlagt, so ist eine Verdunklung des elektrochromen Elements zu beobachten. Wird im Nachhinein die Polarität umgekehrt, also die Komponente EC1 mit einer positiven Spannung und die Komponente EC2 mit einer negativen Spannung beaufschlagt, so ist die Entfärbung bzw. die Aufhellung, also eine Erhöhung der Transmissivität des elektrochromen Elements unter Einstellung des ursprünglichen Zustands zu beobachten.

Ein wesentliches Merkmal dieser nach dem Stand der Technik bekannten elektrochromen Elemente besteht darin, daß zur Veränderung der optischen Transmissivität, sowohl zur Verringerung als auch zur Erhöhung, jedoch nicht zu deren Aufrechterhaltung, das Anlegen einer elektrischen Spannung an die elektrochromen Komponenten nötig ist.

Es sind auch andere Ausführungsformen von elektrochromen Elementen bekannt, die jedoch den Nachteil aufweisen, daß nicht nur zur Erhöhung der Transmissivität, sondern auch zur Aufrechterhaltung dieser eine permanent angelegte Spannung bereitgestellt werden muß. Solche elektrochromen Elemente bestehen wiederum aus zwei Substraten, welche jeweils auf einer Seite mit einer transparenten Elektrode zum Beispiel in Form eines TCO-Materials versehen sind, und einem Redoxpaare aufweisenden Gel, welches sie derart zwischen sich einschließen, daß beide Seiten der Gelschicht mit einer TCO-Elektrode kontaktiert sind. Dabei weist die Redoxpaare beinhaltende Gelschicht sogenannte Viologene auf, welche sich durch Anlegen einer elektrischen Spannung reduzieren oder oxidieren lassen. Dieser chemische Umwandlungsprozeß ist damit verbunden, daß das elektrochrome Element seine Transmissivität verändert. Auch diese Ausführungsform eines elektrochromen Elements weist den Nachteil auf, daß die jeweilige Umkehrreaktion zu der zuvor induzierten Oxidation bzw. Reduktion beim Entfernen der elektrischen Spannung spontan abläuft und damit folglich stets zur Erhöhung der Transmissivität führt. Dies ist allerdings von Vorteil, wenn derartige elektrochrome Systeme z.B. in Automobilen eingesetzt werden sollen. Dort ist es wichtig, daß diese elektrochromen Elemente beim Ausfall der Spannungsversorgung von selbst in den hellen bzw. hoch transmissiven Bereich geschaltet werden können. Derartige elektrochrome Elemente auf Basis von Viologenen und anderen Redoxpaaren sind aus den Schriften US 5 998 617 und DE 60 003 773 bekannt.

Ein Gel mit Redoxpaaren aufweisende elektrochrome Elemente besitzen demnach typischerweise folgende Struktur:
Substrat - TCO - Gel mit Redoxpaaren - TCO - Substrat

Im Vergleich zu elektrochromen Elementen, welche eine ionenleitfähige Komponente aufweisen, deren mittels einer elektrischen Spannung eingestellte Transmissivität sich auch über die Zeit nicht oder nur unwesentlich ändert, zeigen ein Gel mit Redoxpaaren aufweisende elektrochrome Elemente nach Entfernung der elektrischen Spannung eine Ausbleichung, also Erhöhung der Transmissivität innerhalb weniger Sekunden oder Minuten. Eine ionenleitfähige Komponente aufweisende elektrochrome Elemente sind also gegenüber der Selbstentfärbung deutlich stabiler als ein Gel mit Redoxpaaren aufweisende elektrochrome Elemente. Dennoch ist die Stabilität im Zustand niedriger Transmissivität für erstgenannte elektrochrome Elemente nach Entfernen der angelegten Spannung nur für moderate Temperaturen unterhalb etwa 30 - 35°C gewährleistet. Im Vergleich dazu weist diese Ausführungsform von elektrochromen Elementen bei höheren Temperaturen, zum Beispiel bei etwa 50 °C, eine stete Erhöhung seiner Transmissivität, bereits ohne daß eine elektrische Spannung angelegt ist, auf. Darüber hinaus ist die Geschwindigkeit des Ausbleichens bei diesen elektrochromen Elementen durch eine ausgeprägte Temperaturabhängigkeit gekennzeichnet; je höher die Temperatur, welcher das elektrochrome Elemente ausgesetzt ist, desto rascher findet die Erhöhung der Transmissivität statt. Insbesondere in den Sommermonaten liegt die Betriebstemperatur von elektrochrome Elemente aufweisenden Architekturverglasungen häufig zwischen 50 und 60 °C, oftmals sogar zwischen 70 und 80 °C. Bei derart hohen Temperaturen findet dementsprechend eine deutlich meßbare Erhöhung der Transmissivität statt. Auch eine ionenleitfähige Komponente aufweisende elektrochrome Elemente zeigen dann innerhalb weniger Tage ein deutliches Ausbleichen auf. In der Praxis bedeutet dies, daß ein Betreiber seine ein elektrochromes Element aufweisende Architekturverglasung in bestimmten Zeitabständen nachdunkeln muß, um den Effekt der Abdunklung sinnvoll nutzen zu können. Um dies effektiv tun zu können, müßte er jedoch regelmäßig eine Messung der Transmissivität vornehmen, was sich als unpraktikabel darstellt.

Phänomenologisch betrachtet geht dabei die Erhöhung der Transmissivität mit einem Verschwinden frei beweglicher Ladungsträger einher. Die verschwundene Ladung steht deshalb dem Betreiber von elektrochromen Elementen für eine anschließende über eine angelegte elektrische Spannung induzierte Absenkung der Transmissivität nicht mehr zur Verfügung.

Der Erfindung liegt die Aufgabe zugrunde, ein elektrochromes Element zu entwickeln, welches nach dem Absenken seiner Transmissivität mittels kurzzeitigem Anlegen einer elektrischen Spannung, auch nach Entfernen der elektrischen Spannung über einen langen Zeitraum, und auch bei erhöhten Temperaturen eine Stabilisierung des eingestellten Transmissionsgrades, also nur ein geringes Ausbleichen, aufweist.

Diese Aufgabe wird durch die Verwendung mindestens eines Antioxidanten mit einer ersten Konzentration in einem eine ionenleitfähige Komponente aufweisenden elektrochromen Element zur Unterdrückung von Selbstentladung gelöst, wobei die ionenleitfähige Komponente mit zumindest einem Antioxidanten versetzt ist, der zumindest anteilig aus einem oder mehreren 1,3,5-trisubstituierten Phenolen einer ersten Konzentration und zumindest anteilig aus einem oder mehreren sterisch gehinderten Aminen einer zweiten Konzentration besteht

Erfindungsgemäße Systeme weisen auch bei großen Temperaturschwankungen beispielsweise zwischen -20 °C und +70 °C und auch über sehr große Zeiträume, etwa über mehr als 100 Stunden, eine im Vergleich zu nach dem Stand der Technik bekannten elektrochromen Elementen mehrere Größenordnungen geringere Erhöhung der optischen Transmissivität auf.

Der Sinn und Zweck der Zusetzung des Antioxidanten liegt nicht in seiner Fähigkeit, einen photooxidativen Abbau zu unterdrücken, da ein solcher Prozess stets den Angriff von Sauerstoff und UV-Strahlung voraussetzt, welche jedoch beide bei erfindungsgemäßen Elementen, auch während der Herstellung dieser, nicht vorliegen, woraus folgt, daß photooxidativer Abbau von Polymeren in der ionenleitfähigen Komponente zu keinem Zeitpunkt gegeben ist.

Bei einer vorteilhaften Ausführungsform des Erfindungsgegenstandes besteht das die ionenleitfähige Komponente darstellende Polymer aus 68 Gew.-% n-Butylacrylat und 11 Gew.-% 1,4-Butandiolmonoacrylat. Die verbleibenden 21 Gew.-% verteilen sich größtenteils auf einen Weichmacher, ein Leitsalz und einen geeigneten Katalysator für die Polymerisation (Aushärtung). Der erfindungsgemäße Stabilisierungseffekt wird durch Zugabe von 0,1 bis 3,0 Gew.-% eines sterisch gehinderten Amins, wie zum Beispiel Bis(1-octyloxy-2,2,6,6-tetramethyl-4-piperidyl)sebacat und 0,1 bis 2,0 Gew.-% eines 1,3,5-trisubstituierten Phenols, wie zum Beispiel 1,3,5-Trimethyl-2,4,6-tris(3,5-di-tert-butyl-4-hydroxylbenzyl)benzol erreicht. Weitere Beispiele für mögliche Polymerzusammensetzungen von ionenleitfähigen Komponenten lauten wie folgt:
1. 55 Gew.-% n-Butylacrylat, 20 Gew.-% 2-Ethylhexylacrylat, 10 Gew.-% 1,4-Butandiolmonoacrylat, 12 Gew.-% γ-Butyrolacton, 1,8 Gew.-% Lithiumperchlorat, 0,4 Gew.-% eines Katalysators, 0,5 Gew.-% eines sterisch gehinderten Amins und 0,3 Gew.-% eines 1,3,5-trisubstituierten Phenols.
2. 69 Gew.-% n-Butylacrylat, 15 Gew.-% 1,4-Butandiolmonoacrylat, 13 Gew.-% Propylencarbonat, 2 Gew.-% Lithiumperchlorat, 0,3 Gew.-% eines Katalysators, 0,5 Gew.-% eines sterisch gehinderten Amins und 0,2 Gew.-% eines 1,3,5-trisubstituierten Phenols.
3. 72,5 Gew.% n-Butylacrylat, 11,0 Gew.-% 1,4-Butandiolmonoacrylat, 1,0 Gew.-% 1,4-Butandioldiacrylat, 12,0 Gew.-% γ-Butyrolacton, 2,0 Gew.-% Lithiumperchlorat, 0,3 Gew.-% eines Katalysators, 0,8 Gew.-% eines sterisch gehinderten Amins und 0,4 Gew.-% eines 1,3,5-trisubstituierten Phenols.
4. Polyvinylbutyral, zusätzlich ein Weichmacher und ein Leitsalz, gemäß der Patentschriften DE 103 27 517 und WO 02/40578, zusätzlich 0,5 Gew.-% eines sterisch gehinderten Amins und 0,3 Gew.-% eines 1,3,5-trisubstituierten Phenols.

Bei allen drei oben genannten Polymerzusammensetzungen stellen die beiden zuletzt genannten Zugaben von sterisch gehinderten Aminen und 1,3,5-trisubstituierten Phenolen die erfindungsgemäße Zugabe der Antioxidantien dar. Neben der Zugabe einzelner sterisch gehinderter Amine oder 1,3,5-trisubstituierter Phenole ist nach dem Erfindungsgedanken auch möglich, ein Gemisch von zumindest einem sterisch gehinderten Amin und zumindest einem 1,3,5-trisubstituierten Phenol zu dem selben Zweck einzusetzen.

Zweckmäßige Ausgestaltungen des Erfindungsgegenstandes sehen darüber hinaus vor, bei Bedarf Derivate der oben genannten Antioxidantien anzuwenden. Geeignete sterisch gehinderte Amine sind im einfachsten Fall Di-tert.-butylamin oder 2,2,6,6-Tetramethylpiperidin. 1,5-Di-tert.-butyl-3-methylphenol oder 1,3,5-tri-tert.-butylphenol stellen die einfachsten Beispiele für nach dem Erfindungsgedanken geeignete 1,3,5-trisubstituierte Phenole dar.

Weitere Einzelheiten der Erfindung werden in der Zeichnung anhand von schematisch dargestellten Ausführungsbeispielen beschrieben. Hierbei zeigt:

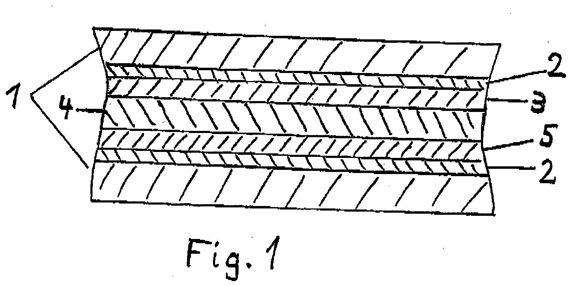

- Figur 1: ein elektrochromes Element mit erfindungsgemäß ausgeführter ionenleitfähiger Komponente.

Figur 1 zeigt die erfindungsgemäße Zusammensetzung eines elektrochromen Elementes. Im dargestellten Schichtaufbau besteht dieses aus einem ersten Substrat 1, einer als Elektrode wirkender darauf aufgebrachten Schicht aus einem elektrisch leitenden, transparenten Material 2, zum Beispiel einem TCO, einer darauf aufgebrachten Schicht aus einem ersten elektrochromen Material 3, einer mit zumindest einem Antioxidanten versetzten ionenleitfähigen Komponente 4, einer zweiten elektrochromen Schicht 5, einer weiteren als Elektrode wirkenden Schicht aus einem transparenten, aber elektrisch leitenden Material 2 sowie einem abschließenden Substrat 1.

Die Substratmaterialien sind insofern frei wählbar, als daß sie lediglich optisch transparent ausgeführt werden sollten, um eine möglichst effektive Wirkung des elektrochromen Effektes bei Anlegen einer elektrischen Spannung zuzulassen. Diese können zum Beispiel Glas oder ein transparenter Kunststoff sein. Als Elektrode wirkende, transparente, aber elektrisch leitende Materialien können sämtliche TCO-Materialien sein, wie zum Beispiel dotierte Metalloxide wie aluminiumdotiertes Zinkoxid, fluordotiertes Zinnoxid oder Indium-Zinnoxid. Kandidaten für Materialien der ersten elektrochromen Schicht 3 können zum Beispiel sein: Wolframoxid, Molybdenoxid, Nickeloxid oder Iridiumoxid. Für die zweite elektrochrome Schicht 5 sind zum Beispiel Ceroxid, Titanoxid, Vanadiumoxid, Nioboxid, Tantaloxid oder Mischung derer geeignet. Die ionenleitfähige Komponente 4 kann auf Basis von modifizierten Polyvinylbutyralen, Polyethylenoxiden, Polyethyleniminen oder Polyacrylaten hergestellt werden. Diese erhalten durch Zugabe von sterisch gehinderten Aminen und/oder 1,3,5-trisubstituierten Phenolen ihre erfindungsgemäße Stabilität bezüglich des Transmissionsgrades.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Substrat
- 2: optisch transparente, elektrisch leitfähige Elektrode
- 3: erste elektrochrome Schicht (EC1)
- 4: ionenleitfähige Komponente mit Antioxidantien versetzt
- 5: zweite elektrochrome Schicht (EC2)

## Patentansprüche

1. Verwendung mindestens eines Antioxidanten mit einer ersten Konzentration in einem eine ionenleitfähige Komponente (4) aufweisenden elektrochromen Element zur Unterdrückung von Selbstentladung, wobei die ionenleitfähige Komponente (4) mit zumindest einem Antioxidanten versetzt ist, der zumindest anteilig aus einem oder mehreren 1,3,5-trisubstituierten Phenolen einer ersten Konzentration und zumindest anteilig aus einem oder mehreren sterisch gehinderten Aminen einer zweiten Konzentration besteht.

2. Verwendung nach Anspruch 1, **dadurch gekennzeichnet, daß** das oder die 1,3,5-trisubstituierten Phenole als 1,5-Di-tert.-butyl-3-methylphenol, oder 1,3,5-Tri-tert.-butylphenol vorliegen.

3. Verwendung nach Anspruch 1, **dadurch gekennzeichnet, daß** das oder die sterisch gehinderten Amine mit 0,1 - 3,0 Gew.-% vorliegen.

4. Verwendung nach Anspruch 1, **dadurch gekennzeichnet, daß** das oder die 1,3,5-trisubstituierten Phenole mit 0,1 - 2,0 Gew-% vorliegen.

## Claims

1. Use of at least one antioxidant with a first concentration in an electrochromic element having an ion conducting component (4) for suppressing self-discharging, wherein at least one antioxidant is added to the ion conducting component (4), wherein the antioxidant at least proportionally consists of one or several 1,3,5-trisubstituted phenols of a first concentration and at least proportionally of one or several sterically hindered amines of a second concentration.

2. Use according to claim 1, wherein the one or several 1,3,5-trisubstituted phenols are 1,5-di-tert-butyl-3-methyl phenol or 1,3,5-tri-tert-butyl phenol.

3. Use according to claim 1, wherein the one or several sterically hindered amines are present with 0.1 - 3.0% by weight.

4. Use according to claim 1, wherein the one or several 1,3,5-trisubstituted phenols are present with 0.1 - 2.0 % by weight.

## Revendications

1. Utilisation d'au moins un antioxydant ayant une première concentration, dans un élément électrochrome présentant un composant (4) conducteur d'ions, pour éliminer la décharge spontanée, le composant (4) conducteur d'ions étant additionné d'au moins un antioxydant qui au moins en partie est constitué d'un ou plusieurs phénols 1,3,5-trisubstitués ayant une première concentration, et au moins en partie d'une ou plusieurs amines à empêchement stérique ayant une deuxième concentration.

2. Utilisation selon la revendication 1, **caractérisée en ce que** le ou les phénols 1,3,5-trisubstitués se présentent sous la forme du 1,5-di-tert-butyl-3-méthylphénol ou du 1,3,5-tri-tert-butylphénol.

3. Utilisation selon la revendication 1, **caractérisée en ce que** la ou les amines à empêchement stérique sont présentes à raison de 0,1 à 3,0 % en poids.

4. Utilisation selon la revendication 1, **caractérisée en ce que** le ou les phénols 1,3,5-trisubstitués sont présents à raison de 0,1 à 2,0 % en poids.
